# EUROPEAN PATENT SPECIFICATION

(11) **EP 4 309 302 B1**
(45) Date of publication and mention of the grant of the patent: **18.06.2025**
(21) Application number: 21714992.1
(22) Date of filing: 18.03.2021
(51) Int. Cl.: H04B 7/155, H04W 40/22, H04L 45/00

(54) **ROUTING DATA OVER A WIRELESS COMMUNICATION LINK**
ROUTEN VON DATEN ÜBER EINE DRAHTLOSE KOMMUNIKATIONSVERBINDUNG
ROUTAGE DE DONNÉES SUR UNE LIAISON DE COMMUNICATION SANS FIL

(43) Date of publication of application: 24.01.2024
(73) Proprietor: Telefonaktiebolaget LM Ericsson (publ), 164 83 Stockholm (SE)
(72) Inventor: RONKAINEN, Henrik, 247 33 Södra Sandby (SE); BRESCHEL, Michael, 222 40 Lund (SE); WESSLÉN, Anders, 245 42 Staffanstorp (SE)
(74) Representative: Ericsson
(86) International application number: PCT/SE2021/050242
(87) International publication number: WO 2022/197226

(56) References cited:
- WO-A1-2020/167186
- WO-A1-2020/167186
- WO-A1-2020/197889
- WO-A1-2020/197889

## Description

### TECHNICAL FIELD

The present disclosure relates to the field of cellular networks and in particular to routing data over a wireless communication link in a cellular network.

### BACKGROUND

In cellular networks, network coverage to instances of user equipment (UEs) is provided by radio network nodes, also known as base stations. Traditionally, each radio network node has a backhaul connection to the core network CN using a wired connection, e.g. over an optical cable and/or galvanic cable.

In order to reduce the need for wired connections, modern cellular networks, such as 5G (fifth generation) and LTE (Long-term evolution) support radio based backhaul traffic. For instance, in 5G, this is implemented using integrated access and backhaul (IAB) nodes. An IAB node is a radio network node that provides access for UEs, but does not need to have a wired-based connection for its backhaul communication. Instead, an IAB node connects to an upstream radio network node (towards the core network) over a wireless communication link in accordance with the radio network. In other words, backhaul traffic for the IAB node is provided using the radio network of the cellular network. It is possible to extend the network with additional IAB nodes having their backhaul connection via another IAB node, such that a wire-connected donor IAB node can provide a backhaul connection to a downstream IAB node via one or more intermediate IAB nodes.

Duplex communication can be provided using time-division duplex (TDD). This implies that each radio network node is scheduled between reception and transmission for backhaul communication as well as for regular UE communication to allow the different radio network nodes to interoperate. The time slots are relatively short to keep latency of communication low.

When a downstream signal is provided from an IAB donor node via an intermediate node to a downstream IAB node, the intermediate IAB node needs to perform post-processing of the downstream signal for demodulation and decoding. Furthermore, in order to forward the downstream signal to the downstream IAB node, the signal must be pre-processed to be ready for transmission. Since the time slots for transmission and reception are kept short, there is often not sufficient time for the intermediate IAB node to perform post-processing and pre-processing of the downstream signal for it all to be ready at the next available time slot for IAB downstream transmission. The transmission of the downstream signal to the downstream IAB node thus needs to wait until the next possible time slot, which causes delay. This delay reduces the applicability of IABs, especially where latency requirements are strict, causing wired backhaul to be required.

WO2020197889A1 and WO2020167186A1 both disclose the use of routing tables and addressing in an adaption layer for IAB (Integrated Access and Backhaul) nodes. There is no disclosure of an intermediate IAB node using descrambled control data for determining a destination IAB node.

### SUMMARY

One object is to reduce delay where a downstream signal is transmitted from an IAB donor node to a downstream IAB node via an intermediate IAB node.

According to a first aspect, it is provided a method for routing data over a wireless communication link in a cellular network, the method being performed in an intermediate integrated access and backhaul, IAB, node. The method comprises the steps of: receiving a downstream signal from an upstream node, the downstream signal comprising control data and payload data, wherein the downstream signal is intended for a downstream IAB node; determining that the downstream IAB node is the recipient of the downstream signal by determining that the control data of the downstream signal can be descrambled using a scrambling identifier of the downstream IAB node; and forwarding the payload data of the downstream signal to the downstream IAB node.

The forwarded payload data of the downstream signal may comprise in-phase quadrature, IQ, samples as received in the downstream signal.

The method may further comprise the step, prior to the step of forwarding the payload data of the downstream signal, of: aligning IQ samples received in the payload data of the downstream signal to constellation points of an assigned modulation scheme of the payload data of the downstream signal.

The scrambling identifier may be a cell radio network temporary identifier, C-RNTI, of the downstream IAB node.

The method may further comprise the steps, after the step of forwarding the payload data of the downstream signal, of: fully decoding the payload data of the downstream signal and determining whether the full demodulating was successful; and providing feedback on success of the full demodulating to the upstream node.

According to a second aspect, it is provided an intermediate integrated access and backhaul, IAB, node, for routing data over a wireless communication link in a cellular network. The intermediate IAB node comprises: a processor; and a memory storing instructions that, when executed by the processor, cause the intermediate IAB node to: receive a downstream signal from an upstream node, the downstream signal comprising control data and payload data, wherein the downstream signal is intended for a downstream IAB node; determine that the downstream IAB node is the recipient of the downstream signal by determining that control data of the downstream signal can be descrambled using the scrambling identifier of the downstream IAB node; and forward the payload data of the downstream signal to the downstream IAB node.

The forwarded payload data of the downstream signal may comprise in-phase quadrature, IQ, samples as received in the downstream signal.

The intermediate IAB node may further comprise instructions that, when executed by the processor, cause the intermediate IAB node to: align IQ samples received in the payload data of the downstream signal to constellation points of an assigned modulation scheme of the payload data of the downstream signal.

The scrambling identifier may be a cell radio network temporary identifier, C-RNTI, of the downstream IAB node.

The intermediate IAB node may further comprise instructions that, when executed by the processor, cause the intermediate IAB node to, prior to forwarding the payload data of the downstream signal: fully decode the payload data of the downstream signal and determining whether the full demodulating was successful; and provide feedback on success of the full demodulating to the upstream node.

According to a third aspect, it is provided a computer program for routing data over a wireless communication link in a cellular network. The computer program comprises computer program code which, when executed on an intermediate integrated access and backhaul, IAB, node, causes the intermediate IAB node, to: receive a downstream signal from an upstream node, the downstream signal comprising control data and payload data, wherein the payload data comprises the data for the user device, wherein the downstream signal is intended for a downstream IAB node; and determine that the downstream IAB node is the recipient of the downstream signal by determining that control data of the downstream signal can be descrambled using a scrambling identifier of the downstream IAB node; and forward the payload data of the downstream signal to the downstream IAB node.

According to a fourth aspect, it is provided a computer program product comprising a computer program according to the third aspect and a computer readable means on which the computer program is stored.

According to a fifth aspect, it is provided a method for routing data over a wireless communication link in a cellular network, the method being performed in an integrated access and backhaul, IAB, donor node. The method comprises the steps of: receiving data for a user device; determining that the data is to be routed via an intermediate IAB node to a downstream IAB node; generating a downstream signal intended for the downstream IAB node, which comprises scrambling control data of the downstream signal using a scrambling identifier of the downstream IAB node, wherein the downstream signal comprises the control data and payload data, wherein the payload data comprises the data for the user device; and transmitting the downstream signal to the intermediate IAB node.

The scrambling identifier may be a cell radio network temporary identifier, C-RNTI, of the downstream IAB node.

According to a sixth aspect, it is provided an integrated access and backhaul, IAB, donor node, for routing data over a wireless communication link in a cellular network. The IAB donor node comprises: a processor; and a memory storing instructions that, when executed by the processor, cause the IAB donor node to: receive data for a user device; determine that the data is to be routed via an intermediate IAB node to a downstream IAB node; generate a downstream signal intended for the downstream IAB node, which comprises scrambling control data of the downstream signal using a scrambling identifier of the downstream IAB node, wherein the downstream signal comprises the control data and payload data, wherein the payload data comprises the data for the user device; and transmitting the downstream signal to the intermediate IAB node.

The scrambling identifier is a cell radio network temporary identifier, C-RNTI, of the downstream IAB node.

According to a seventh aspect, it is provided a computer program for routing data over a wireless communication link in a cellular network. The computer program comprises computer program code which, when executed on an integrated access and backhaul, IAB, donor node, causes the IAB donor node to: receive data for a user device; determine that the data is to be routed via an intermediate IAB to a downstream IAB node; generate a downstream signal intended for the downstream IAB node, which comprises scrambling control data of the downstream signal using a scrambling identifier of the downstream IAB node, wherein the downstream signal comprises the control data and payload data, wherein the payload data comprises the data for the user device; and transmitting the downstream signal to the intermediate IAB node.

According to an eighth aspect, it is provided a computer program product comprising a computer program according to the seventh aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2 is a schematic diagram illustrating time-division duplex operation in the environment of Fig 1;
Fig 3 is a schematic diagram illustrating timing issues that occur in the prior art;
Fig 4 is a sequence diagram illustrating communication between various entities of embodiments which can be applied in the environment of Fig 1;
Fig 5 is a schematic diagram illustrating how the timing issues are resolved according to embodiments presented herein;
Figs 6A-B are flow charts illustrating embodiments of methods for routing data over a wireless communication link in a cellular network, performed in an intermediate IAB node;
Fig 7 is a flow chart illustrating embodiments of methods for routing data over a wireless communication link in a cellular network, performed in an IAB donor node;
Fig 8 is a schematic diagram illustrating components of the IAB donor node and the intermediate IAB node of Fig 1 according to one embodiment;
Fig 9 is a schematic diagram showing functional modules of the intermediate IAB node of Fig 1 according to one embodiment; and
Fig 10 is a schematic diagram showing functional modules of the IAB donor node of Fig 1 according to one embodiment; and
Fig 11 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

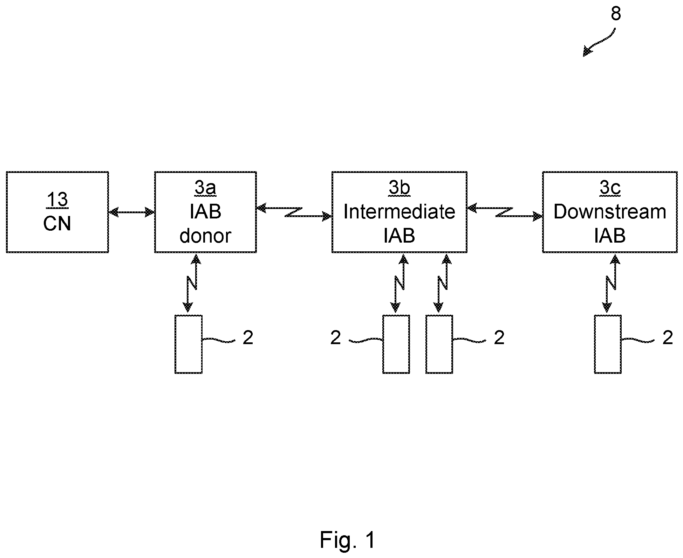

Fig 1 is a schematic diagram illustrating a cellular network 8 where embodiments presented herein may be applied. The cellular network 8 comprises a core network 13 radio network nodes (also known as radio base stations) 3a-c. The radio network nodes perform functions for the radio access network, i.e. performing gNode B functions. The radio network nodes 3a-c could also implement radio access network functions for any other current or future radio network node as long as the embodiments presented herein are applicable. The radio network nodes 3a-c provide radio access over a wireless communication links to UEs 2. The term UE is also known as mobile communication terminal, wireless device, mobile terminal, user terminal, user agent, wireless terminal, machine-to-machine device etc., and can be, for example, be implemented as what today is commonly known as a mobile phone, smartphone, fixed wireless terminal (FWT) or a tablet/laptop with wireless connectivity.

The cellular network 8 may e.g. comply with any suitable cellular network standards, such as 5G NR (New Radio), 6G, etc. or any other current or future wireless network, as long as the principles described herein are applicable.

Over the wireless interface, downstream communication is defined as the direction from the core network 13 towards one of the UEs 2 and upstream communication is defined as the direction from one of the UEs 2 towards the core network 13. Downlink communication is defined as transmission from a particular radio network node and uplink communication is reception at a radio network node. The quality of the wireless radio interfaces can vary over time and depending on the position of the transmitters and receivers, due to effects such as fading, multipath propagation, interference, noise, etc.

Each radio network node 3a-c transmits both control data and payload data. Please note that the structure and naming of the channels and signals used herein are not limiting and can vary depending on the radio access technology that is used. The channel and signal structure is exemplified herein as applied for 5G NR. Control data can be transmitted from each radio network node 3a-c as Downlink Control Information (DCI) on a Physical Downlink Control Channel (PDCCH). The DCI can specify where payload data occurs on a Physical Downlink Shared Channel (PDSCH) for the recipient UE 2. Conventionally, the DCI is scrambled with a scrambling identifier. Such a scrambling identifier can e.g. be a Cell Radio Network Temporary Identifier (for the UE 2). The UE 2 descrambles its DCI using its scrambling identifier, determines where to find its downlink payload data on the PDSCH. This allows the UE 2 to receive, demodulate and decode its downlink data. It is to be noted that the UE attempts to descramble DCIs addressed to other UEs, but only succeeds in descrambling and decoding DCIs that are scrambled with its own scrambling identifier, and according to embodiments presented herein, scrambling identifiers for any downstream IAB nodes..

The core network 13 provides central functions and connection to a wide area network, such as the Internet.

The radio network nodes 3a-c in Fig 1 are configured for IAB communication. As explained above, an IAB node is a radio network node that provides access for UEs, but connects to an upstream radio network node over a wireless communication link (over the cellular network) for backhaul communication.

There is an IAB donor node 3a with a wired connection to the core network 13. The IAB donor node 3a provides a radio network accessible for UEs 2 as well as a wireless communication link for the intermediate IAB node 3b. The intermediate IAB node 3b, in turn, provides a radio network accessible for UEs 2 as well as a wireless communication link for a downstream IAB node 3c. The term downstream IAB node 3c defines that the downstream IAB node is downstream from the intermediate IAB node 3b. The downstream IAB node 3c provides a radio network accessible for UEs. Each IAB node 3b, 3c implements UE functionality for the nearest upstream radio network node. In other words, the intermediate IAB node 3b implements UE functionality for communication with the IAB donor node 3a and the downstream IAB node 3c implements UE functionality for communication with the intermediate IAB node 3b.

Using the structure of Fig 1, a downstream signal can pass from the core network 13 to the IAB donor node 3a, via the intermediate IAB node 3b and the downstream IAB node 3c to reach the UE 2 connected to the downstream IAB node 3c. Over the wireless communication links, the downstream signal comprises both control data transmitted over PDCCH and payload data transmitted over PDSCH. Neither one of the intermediate IAB node 3b and the downstream IAB node 3c needs to be connected to a wired communication link for backhaul communication, since this is achieved with wireless communication with the nearest upstream radio network node, e.g. as described in 3GPP TR 38.874 v 1.0.0. In this structure, the intermediate IAB node 3b has the ability to route received data to the correct recipient, e.g. the downstream IAB node or a UE connected to the intermediate IAB node 2b.

It is to be noted that there could be multiple intermediate IAB nodes in sequence between the IAB donor node 3a and the downstream IAB node 3c, even though only one intermediate IAB node 3b is shown in Fig 1.

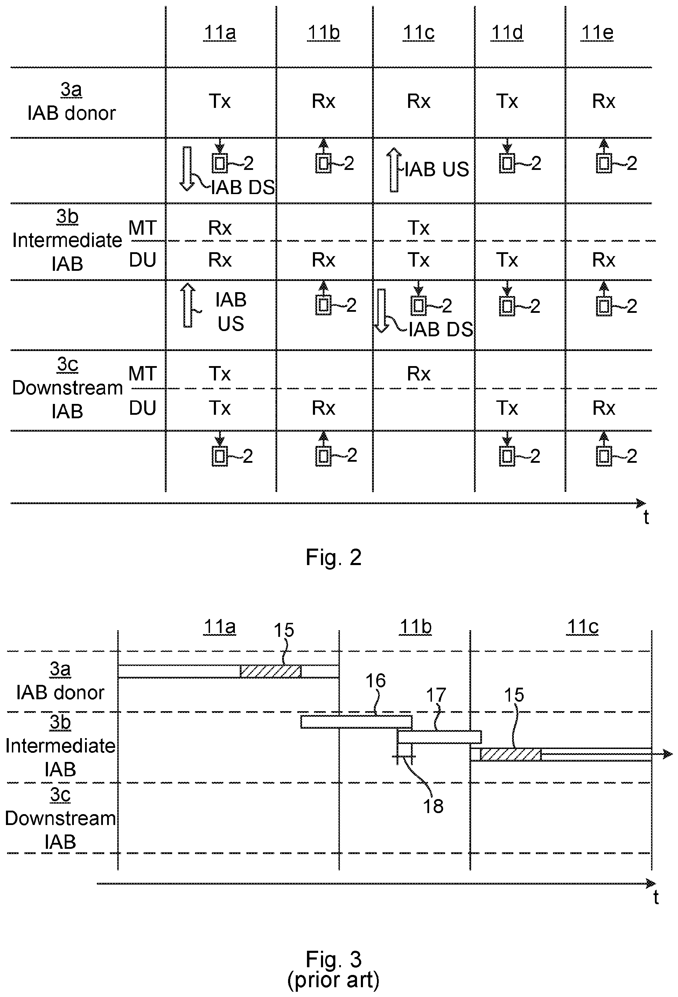

Fig 2 is a schematic diagram illustrating time-division duplex (TDD) operation in the environment of Fig 1. Time flows from left to right and the time is here divided into time slots 11a-e. On the left-hand side, the IAB donor node 3a, the intermediate IAB node 3b and the downstream IAB node 3c are shown. The IAB nodes 3b-3c are split vertically in a mobile termination (MT) side, implementing UE functionality for backhaul communication with an upstream node, and a distributed unit (DU) side, implementing radio network node functionality for communication with downstream nodes and UEs. The diagram is in the form of a matrix, illustrating communication between the different nodes 3a-c in different time slots.

In TDD, transmission and reception does not take place simultaneously. For a non-IAB node, this is handled by alternating between transmission timeslots and receiving timeslots. The radio network nodes of a network can be synchronized so that they all transmit at the same time and receive at the same time. With IAB, this simple structure does not work, since the nodes have both the UE role (the MT) and the base station role (the DU). A more complex transmit/receive structure is needed which limits the available slots for upstream and downstream backhaul communication even more. Hence, for low latency, it is important to be able to utilize the first available slot.

In a first time slot 11a, the IAB donor node 3a is in a transmit (Tx) state and transmits both IAB downstream (DS) communication to the MT of the intermediate IAB node 3b as well as downlink (DL) communication to any connected UEs 2. Similarly, the downstream IAB node 3c is in a Tx state; its MT transmits IAB upstream (US) communication to the intermediate IAB node 3b and the DU transmits DL communication to any connected UEs 2. The intermediate IAB node 3b is in a receiving (Rx) state; its MT receives the IAB DS communication from the IAB donor node 3a and its DU received the IAB US communication from the downstream IAB node 3c.

In a second time slot 11b, no IAB backhaul communication occurs, and all three nodes 3a-c are in an RX state and receive UL communication from their connected UEs 2.

In a third time slot 11c, the intermediate IAB node 3b is in a Tx state; its MT transmits IAB US communication to the IAB donor node 3a and its DU transmits IAB DS communication to the MT of the downstream IAB node 3c. Also, the DU of the intermediate IAB node 3b transmits DL communication to its connected UEs 2. Both the IAB donor node 3a and the downstream IAB node 3c are in an Rx state here.

In a fourth time slot 11d, no IAB backhaul communication occurs, and all three nodes 3a-c are in a TX state, transmitting DL communication to their connected UEs 2.

The fifth time slot 11e is the same as the second time slot 11b.

Fig 3 is a schematic diagram illustrating timing issues that occur in the prior art. The example shown in Fig 3 occurs in the first three time slots of Fig 2, illustrated with some more detail on processing related to the communication. In this sequence, the IAB donor node 3a transmits a downstream signal via the intermediate IAB node 11b destined for a UE that is connected to the downstream IAB node 3c.

Looking into this communication in some more detail, in the first slot 11a, the IAB donor node 3a transmits the downstream signal 15. The intermediate IAB node 3b receives the downstream signal 15 and performs postprocessing 16. If the intermediate IAB node 3b is to transmit corresponding downstream signal 15 in the third slot 11c, pre-processing 17 needs to occur to prepare the signal (e.g. scheduling, encoding, modulating).

However, due to the limited processing power of the intermediate IAB node 3b, there is a time conflict 18 since there the pre-processing 17 would need to start before the postprocessing 16 has finished. Since this is not possible, the corresponding downlink signal will need to wait until the next available time slot (not shown) after the third time slot 11c when downstream IAB communication can be transmitted by the intermediate IAB node 3b. Referring to Fig 2, it can be seen that the next time slot that downstream IAB communication can be transmitted by the intermediate IAB node 3b can be many time slots away. This delay can be quite detrimental and should be avoided if possible.

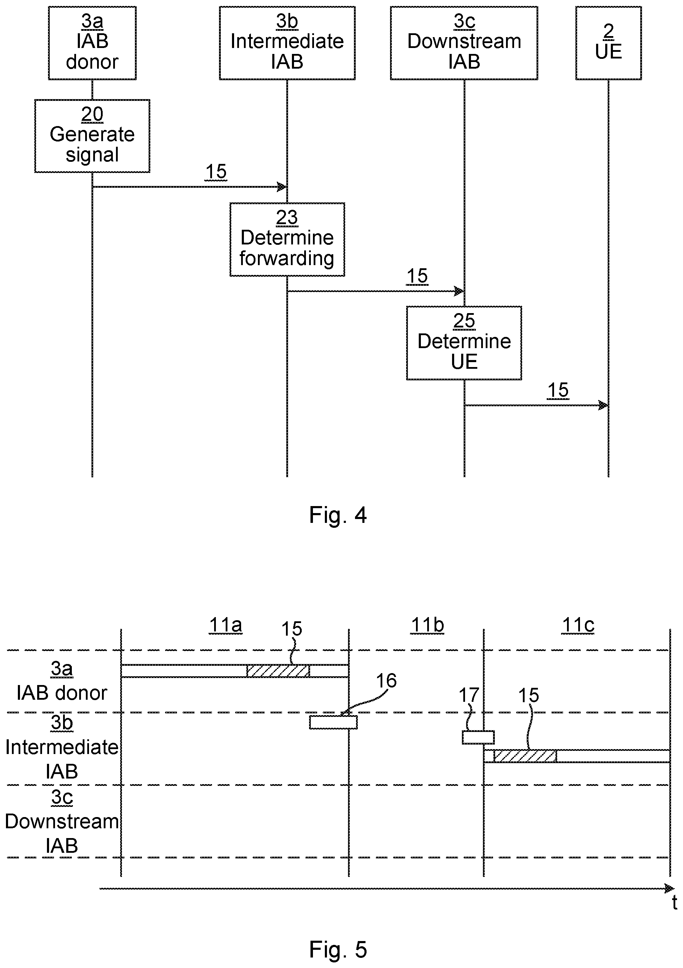

Fig 4 is a sequence diagram illustrating communication between various entities of embodiments which can be applied in the environment of Fig 1 to address the problems illustrated in Fig 3.

According to embodiments presented herein, the intermediate IAB node can determine that the downstream signal is destined for another IAB node before demodulating and decoding the downstream signal when received from the upstream node. This is achieved by the intermediate IAB node 3b finding that control signals of the downstream signal are scrambled for the downstream IAB node using its scrambling identifier, e.g. its C-RNTI.

Looking into this in some more detail, the IAB donor node 3a generates 20 the downstream signal, and encodes control data for the downstream signal using the scrambling identifier of the downstream IAB node 3c. The IAB donor node 3a then transmits the downstream signal 15 over its radio interface to the intermediate IAB node 3b.

The intermediate IAB node 3b determines 23 that it should forward the downstream signal 15 to the downstream IAB node 3c by determining that the control information for the downstream signal 15 can be descrambled using the scrambling identifier of the downstream IAB node 3c. At this point, the intermediate IAB node 3b forwards the downstream signal 15 to the downstream IAB node 3c.

From the perspective of the downstream IAB node 3c, the downstream signal 15 can be received in a conventional manner. The downstream IAB node 3c determines 25 the UE 2 to transmit to and transmits the downstream signal 15 to the determined UE 2 as known in the art per se.

Fig 5 is a schematic diagram illustrating how the timing issues are resolved according to embodiments presented herein, as illustrated in Fig 4.

Compared to the timing illustrated in Fig 3, since the intermediate IAB node 3b does not need to perform at least some or even all of demodulating, decoding, encoding and modulating of the downstream signal, both the postprocessing 16 and the pre-processing 17 can be performed in a much shorter time. A consequence of this is that the downstream signal 15 can be included already in the third downlink time slot 11c, saving significant time on routing the downstream signal to the intended UE. If there are several intermediate IAB nodes along the way from the IAB donor node 3a to the UE, the time savings are even greater when embodiments presented herein are applied. The postprocessing 16 here involves determining that the downlink signal is to be forwarded. The pre-processing 17 here can involves scheduling the forwarded downlink signal 15.

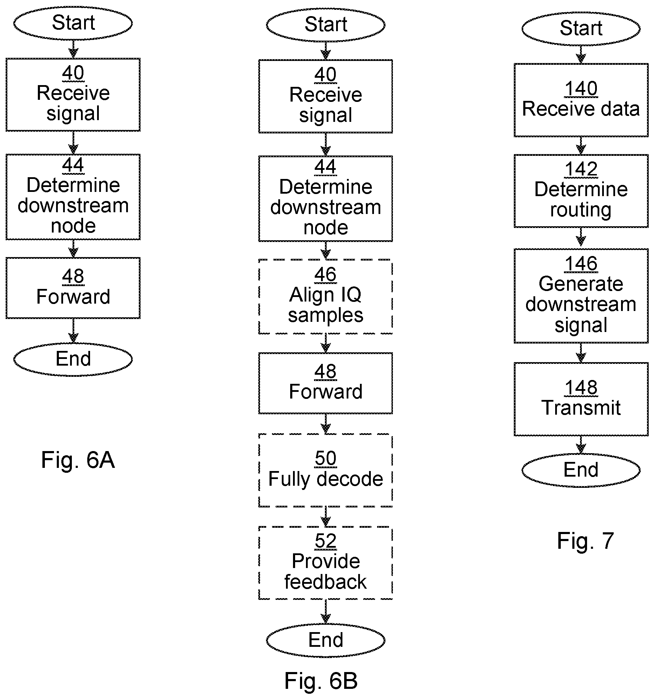

Figs 6A-B are flow charts illustrating embodiments of methods for routing data over a wireless communication link in a cellular network, performed in an intermediate IAB node 3b. First, embodiments illustrated by Fig 6A will be described.

In a *receive signal* step 40, the intermediate IAB node 3b receives a downstream signal from an upstream node. The downstream signal comprises control data and payload data. The downstream signal is intended for a downstream IAB node 3c. The upstream node can be an IAB donor node 3a or an upstream intermediate IAB node. The control data be in the form of DCI on the PDCCH. The control data is received over the wireless access provided by the nearest upstream radio network node, i.e. the IAB donor node 3a or upstream intermediate IAB node.

In a *determine downstream node* step 44, the intermediate IAB node 3b determines that the downstream IAB node 3c is the recipient of the downstream signal. This is achieved by determining that control data of the downstream signal can be descrambled using a scrambling identifier of the downstream IAB node 3c. The scrambling identifier can be obtained from local memory. The scrambling identifier can be the C-RNTI of the downstream IAB node 3c. The intermediate IAB node 3b obtains one or more scrambling identifiers of respective downstream IAB nodes to which downstream data could potentially need to be forwarded. This depends on the network topology and is preconfigured (manually, automatically or semi-automatically) prior to this method commencing.

The control data is in the form of DCI on PDCCH. Hence, in addition to descrambling its own DCI using its own scrambling identifier, the intermediate IAB node 3b attempts to descramble DCI for the downstream IAB node 3c using the scrambling identifier of the downstream IAB node 3c. If there are several downstream IAB nodes, the intermediate IAB node 3b attempts to descramble for each one of the downstream IAB nodes. When this descrambling (and subsequent decoding) is successful for at least one downstream IAB node, that indicates that the downlink signal should be forwarded to the downstream IAB node 3c.

This can be the same procedure as the blind decoding known from the prior art *per se,* but this is here performed multiple scrambling identifiers, i.e. not only for its own scrambling identifier, as in the prior art.

When the downstream node has been determined, the intermediate IAB node 3b has thus both demodulated and decoded the DCI scrambled with the scrambling identifier of the downstream IAB node 3c, to determine where the payload data is scheduled. The intermediate IAB node receives the payload data on the PDSCH as pointed to by the DCI. The payload data is received first as analogue data, converted to digital data and is represented as samples in complex data form as in-phase quadrature (IQ).

In one embodiment, instead of determining the downstream IAB node 3c based on the scrambling identifier, the downstream IAB node 3c is determined based on presence of an indication in the payload data, received on PDSCH. This step then comprises demodulating and decoding a strict subset of the payload data of the downstream signal, yielding a decoded and demodulated section; and determining that the demodulated and decoded section comprises an indication that the downstream IAB node 3c is the recipient of the downstream signal. The strict subset of the downstream signal can be in a section of the payload data that is received first, to reduce any delay of forwarding the payload data, see also the corresponding perspective from the IAB donor node in the description for step 146 below.

The control data is typically transmitted first in each time slot. This allows the intermediate IAB node 3b to quickly understand that the payload data of the downstream signal is to be forwarded, and gives more time for the intermediate IAB node 3b to pre-process for downstream transmission, e.g. for scheduling.

In a *forward* step 48, the intermediate IAB node 3b forwards the payload data of the downstream signal (received on PDSCH) to the downstream IAB node 3c. It is to be noted that the intermediate IAB node 3b can generate the control data for the forwarding, even if the payload data is the same. This is done to give the intermediate IAB node freedom to schedule the payload data where it is most appropriate.

When the payload data includes an indication that the downstream IAB node 3c is the recipient of the downstream signal, this indication is removed from the payload data prior to forwarding. If there are multiple intermediate IAB nodes 3b, only the last intermediate IAB node removes the indication.

In one embodiment, the forwarded payload data of the downstream signal comprises IQ samples as received in the downstream signal, i.e. the IQ sample values are not altered prior to forwarding, to reduce any time for forwarding the signal.

It is to be noted that the forwarded payload data can be data destined for a UE, operation and maintenance data for a radio network node, application control data for the radio network node, or any other suitable data, such as data for any equipment connected to the downstream IAB node.

Looking now to Fig 6B, only new or modified steps compared to Fig 6A will be described.

In an optional *align IQ samples* step 46, the intermediate IAB node 3b aligns IQ samples received in the downstream signal to constellation points of an assigned modulation scheme of the downstream signal. The aligning here implies that the value, corresponding to the IQ sample, is set to be the nearest constellation point in an IQ plane. The modulation scheme is defined e.g. as part of a Modulation and Coding Scheme (MCS), communicated from the upstream radio network node, and can be e.g. one of Quadrature phase-shift keying (QPSK), 16 Quadrature Amplitude Modulation (QAM), 64 QAM, 256 QAM, etc.

In an optional fully *decode* step 50, the intermediate IAB node 3b fully decodes the payload data of downstream signal (on PDSCH) and determines whether the full decoding was successful.

In an optional *provide feedback* step 52, the intermediate IAB node 3b provides feedback on success of the full demodulating to the upstream node, e.g. as a Hybrid Automatic Repeat Request (HARQ) response.

When steps 50 and 52 are implemented, the IAB donor node 3a is provided with feedback on transmission performance on the hop to the intermediate IAB node, at the cost of the intermediate IAB node having to fully decode the payload data of the downstream data, It is to be noted that the forwarding of payload data in step 48 can proceed without await the completion of steps 50 and 52, whereby the execution of steps 50 and 52 does not impose any delay on the forwarding.

It is to be noted that steps 50 and 52 do not need to be performed. In other words, the intermediate IAB node 3b would in this case not demodulate or decode the payload data of the downstream signal (on PDSCH), and only forwards the IQ samples, resulting in a simpler and faster implementation of the forwarding in the intermediate IAB node 3b. In this case, feedback on reception is provided from downstream nodes, such as the downstream IAB node 3c and/or the UE 2. The feedback is then relayed back upstream via the intermediate IAB node 3b.

Fig 7 is a flow chart illustrating embodiments of methods for routing data over a wireless communication link in a cellular network, performed in an IAB donor node 3a. It is to be noted that when there are multiple intermediate IAB nodes between the wired network and the final downstream IAB, the IAB donor node described here can in itself be an intermediate IAB node that is located upstream from another intermediate IAB node.

In a *receive data* step 140, the IAB donor node 3a receives data for a user device, the IAB donor node 3a.

In a *determine routing* step 142, the IAB donor node 3a determines that the data is to be routed via an intermediate IAB node 3b to a downstream IAB node 3c.

In a *generate downstream signal* step 146 the IAB donor node 3a generates a downstream signal intended for the downstream IAB node 3c. This comprises scrambling control data (of the DCI) of the downstream signal using a scrambling identifier of the downstream IAB node 3c. As explained above, the scrambling identifier can be the C-RNTI of the downstream IAB node 3c. The downstream signal comprises the control data and payload data. The payload data comprises the data for the user device.

When the intermediate IAB node 3b is to determine the downstream IAB node 3c based on information in the payload data, the generate downstream signal step 146 does not need to scramble the control data using the scrambling identifier of the downstream IAB node, and instead scrambles control data using the scrambling identifier of the intermediate IAB node, as known in the art per se. In such an embodiment, the *generate downstream signal* step 146 comprises generating an indication that the downstream IAB node 3c is the recipient of the downstream signal and including the indication in the payload data, i.e. in the PDSCH part. The indication can be provided in a section of the payload data that is transmitted first. The structure and content of the indication is according to a predefined format allowing the intermediate IAB node 3b to determine that the data of the signal should be forwarded to the downstream IAB node 3c.

In a transmit step 148 the IAB donor node 3a transmits the downstream signal to the intermediate IAB node 3b, over the wireless backhaul link to the intermediate IAB node 3b.

The allocation of scrambling identifiers within a network of IAB nodes can be performed such that duplicates are avoided, unless the number of possible identifiers is so large that the risk is virtually zero. This will be exemplified here in a pair of nodes denoted the upstream radio network node and an IAB node. The upstream radio network node is the one that provides the radio access for the backhaul communication for the IAB node. The pair can e.g. be the IAB donor node 3a being the upstream radio network node and the intermediate IAB node 3b being the IAB node. Alternatively, the pair can be the intermediate IAB node 3b being the upstream radio network node and the downstream IAB node 3c being the IAB node. In one embodiment, when an upstream radio network node allocates a scrambling identifier when an IAB node performs random access , the upstream radio network node might not be aware that the random access is from an IAB node. To avoid the risk of duplicates of scrambling identifiers within the network of IABs, the upstream radio network node can provide a list of all scrambling identifiers already allocated when the IAB node is brought into service. Thus, a potential new upstream radio network node can assign a unique scrambling identifier, as it knows its own scrambling identifier and all other scrambling identifiers in the network of IAB nodes.

Other schemes are possible, such as rule based (e.g. only allowed to allocate scrambling identifiers at a certain offset and range from your own scrambling identifiers). The scrambling identifiers can be allocated such that all IAB nodes have unique scrambling identifiers under a single IAB donor node. Alternatively, a scheme can be applied where some reuse of the scrambling identifiers is made possible, as long as the principles presented herein can be applied.

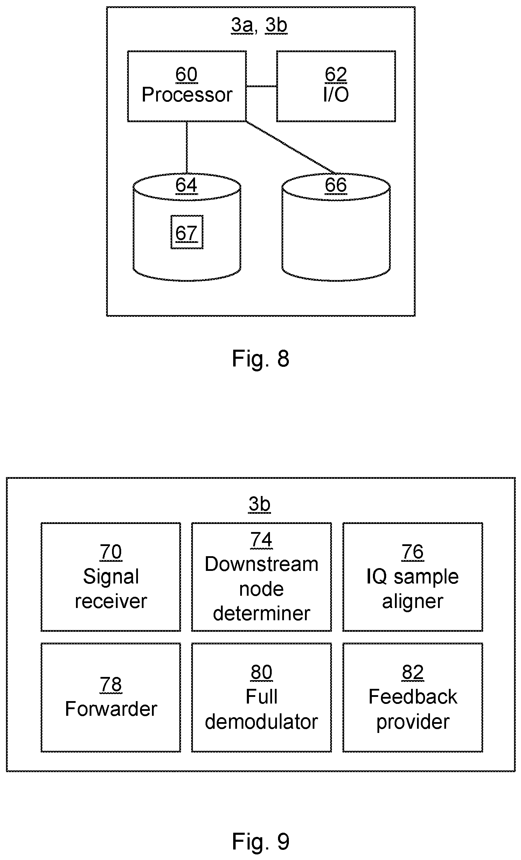

Fig 8 is a schematic diagram illustrating components of the IAB donor node 3a and the intermediate IAB node 3b of Fig 1 according to one embodiment. A processor 60 is provided using any combination of one or more of a suitable central processing unit (CPU), graphics processing unit (GPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Figs 6A-B and Fig 7 above.

The memory 64 can be any combination of random-access memory (RAM) and/or read-only memory (ROM). The memory 64 also comprises persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

An I/O interface 62 is provided for communicating with external and/or internal entities. Optionally, the I/O interface 62 also includes a user interface.

Other components are omitted in order not to obscure the concepts presented herein.

Fig 9 is a schematic diagram showing functional modules of the intermediate IAB node 3b of Fig 1 according to one embodiment. The modules are implemented using software instructions such as a computer program executing in the intermediate IAB node 3b. Alternatively or additionally, the modules are implemented using hardware, such as any one or more of an ASIC (Application Specific Integrated Circuit), an FPGA (Field Programmable Gate Array), or discrete logical circuits. The modules correspond to the steps in the methods illustrated in Figs 6A-B.

A signal receiver 70 corresponds to step 40. A downstream node determiner 74 corresponds to step 44. An IQ sample aligner 76 corresponds to step 46. A forwarder 78 corresponds to step 48. A full demodulator 80 corresponds to step 50. A feedback provider 82 corresponds to step 52.

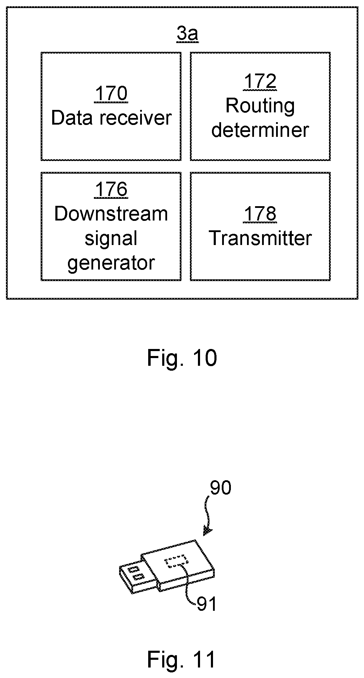

Fig 10 is a schematic diagram showing functional modules of the IAB donor node 3a of Fig 1 according to one embodiment. The modules are implemented using software instructions such as a computer program executing in the IAB donor node 3a. Alternatively or additionally, the modules are implemented using hardware, such as any one or more of an ASIC (Application Specific Integrated Circuit), an FPGA (Field Programmable Gate Array), or discrete logical circuits. The modules correspond to the steps in the methods illustrated in Fig 7.

A data receiver 170 corresponds to step 140. A routing determiner 172 corresponds to step 142. A downstream signal generator 176 corresponds to step 146. A transmitter 178 corresponds to step 148.

Fig 11 shows one example of a computer program product 90 comprising computer readable means. On this computer readable means, a computer program 91 can be stored, which computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 8. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for routing data over a wireless communication link in a cellular network (8), the method being performed in an intermediate integrated access and backhaul, IAB, node, (3b) the method comprising the steps of:
receiving (40) a downstream signal from an upstream node, the downstream signal comprising control data and payload data, wherein the downstream signal is intended for a downstream IAB node (3c);
determining (44) that the downstream IAB node (3c) is the recipient of the downstream signal by determining that the control data of the downstream signal can be descrambled using a scrambling identifier of the downstream IAB node (3c); and
forwarding (48) the payload data of the downstream signal to the downstream IAB node (3c).

2. The method according to claim 1, wherein the forwarded payload data of the downstream signal comprises in-phase quadrature, IQ, samples as received in the downstream signal.

3. The method according to claim 1, further comprising the step, prior to the step of forwarding the payload data of the downstream signal, of:
aligning (46) IQ samples received in the payload data of the downstream signal to constellation points of an assigned modulation scheme of the payload data of the downstream signal.

4. The method according to any one of the preceding claims, wherein the scrambling identifier is a cell radio network temporary identifier, C-RNTI, of the downstream IAB node (3c).

5. The method according to any one of the preceding claims, further comprising the steps, after the step of forwarding the payload data of the downstream signal, of:
fully decoding (50) the payload data of the downstream signal and determining whether the full demodulating was successful; and
providing feedback (52) on success of the full demodulating to the upstream node.

6. An intermediate integrated access and backhaul, IAB, node, (3b) for routing data over a wireless communication link in a cellular network (8), the intermediate IAB node (3b) comprising:
a processor (60); and
a memory (64) storing instructions (67) that, when executed by the processor, cause the intermediate IAB node (3b) to:
receive a downstream signal from an upstream node, the downstream signal comprising control data and payload data, wherein the downstream signal is intended for a downstream IAB node (3c);
determine that the downstream IAB node (3c) is the recipient of the downstream signal by determining that control data of the downstream signal can be descrambled using the scrambling identifier of the downstream IAB node (3c); and
forward the payload data of the downstream signal to the downstream IAB node (3c).

7. The intermediate IAB node (3b) according to claim 6, wherein the forwarded payload data of the downstream signal comprises in-phase quadrature, IQ, samples as received in the downstream signal.

8. The intermediate IAB node (3b) according to claim 6, further comprising instructions (67) that, when executed by the processor, cause the intermediate IAB node (3b) to:
align IQ samples received in the payload data of the downstream signal to constellation points of an assigned modulation scheme of the payload data of the downstream signal.

9. The intermediate IAB node (3b) according to any one of claims 6 to 8, wherein the scrambling identifier is a cell radio network temporary identifier, C-RNTI, of the downstream IAB node (3c).

10. The intermediate IAB node (3b) according to any one of claims 6 to 9, further comprising instructions (67) that, when executed by the processor, cause the intermediate IAB node (3b) to:
fully decode the payload data of the downstream signal and determine whether the full demodulating was successful; and
provide feedback on success of the full demodulating to the upstream node.

11. A computer program (67, 91) for routing data over a wireless communication link in a cellular network (8), the computer program comprising computer program code which, when executed on an intermediate integrated access and backhaul, IAB, node, (3b) causes the intermediate IAB node (3b) to:
receive a downstream signal from an upstream node, wherein the downstream signal is intended for a downstream IAB node (3c), the downstream signal comprising control data and payload data;
determine that the downstream IAB node (3c) is the recipient of the downstream signal by determining that control data of the downstream signal can be descrambled using a scrambling identifier of the downstream IAB node (3c); and
forward the payload data of the downstream signal to the downstream IAB node (3c).

12. A method for routing data over a wireless communication link in a cellular network (8), the method being performed in an integrated access and backhaul, IAB, donor node, (3a) the method comprising the steps of:
receiving (140) data for a user device;
determining (142) that the data is to be routed via an intermediate IAB node (3b) to a downstream IAB node (3c);
generating (146) a downstream signal intended for the downstream IAB node (3c), which comprises scrambling control data of the downstream signal using a scrambling identifier of the downstream IAB node (3c), wherein the downstream signal comprises the control data and payload data, wherein the payload data comprises the data for the user device; and
transmitting (148) the downstream signal to the intermediate IAB node (3b).

13. The method according to claim 12, wherein the scrambling identifier is a cell radio network temporary identifier, C-RNTI, of the downstream IAB node (3c).

14. An integrated access and backhaul, IAB, donor node, (3a) for routing data over a wireless communication link in a cellular network (8), the IAB donor node (3a) comprising:
a processor (60); and
a memory (64) storing instructions (67) that, when executed by the processor, cause the IAB donor node (3a) to:
receive data for a user device;
determine that the data is to be routed via an intermediate IAB node (3b) to a downstream IAB node (3c);
generate a downstream signal intended for the downstream IAB node (3c), which comprises scrambling control data of the downstream signal using a scrambling identifier of the downstream IAB node (3c), wherein the downstream signal comprises the control data and payload data, wherein the payload data comprises the data for the user device; and
transmit (148) the downstream signal to the intermediate IAB node (3b).

15. The IAB donor node (3a) according to claim 14, wherein the scrambling identifier is a cell radio network temporary identifier, C-RNTI, of the downstream IAB node (3c).

16. A computer program (67, 91) for routing data over a wireless communication link in a cellular network (8), the computer program comprising computer program code which, when executed on an integrated access and backhaul, IAB, donor node, (3a) causes the IAB donor node (3a) to:
receive data for a user device;
determine that the data is to be routed via an intermediate IAB node (3b) to a downstream IAB node (3c);
generate a downstream signal intended for the downstream IAB node (3c), which comprises scrambling control data of the downstream signal using a scrambling identifier of the downstream IAB node (3c), wherein the downstream signal comprises the control data and payload data, wherein the payload data comprises the data for the user device; and
transmit (148) the downstream signal to the intermediate IAB node (3b).

## Patentansprüche

1. Verfahren zum Routen von Daten über eine drahtlose Kommunikationsverbindung in einem Mobilfunknetz (8), wobei das Verfahren in einem zwischengeschalteten integrierten Zugriffs- und Backhaul-Knoten, IAB-Knoten, (3b) durchgeführt wird, wobei das Verfahren die folgenden Schritte umfasst:
Empfangen (40) eines stromabwärtigen Signals von einem stromaufwärtigen Knoten, wobei das stromabwärtige Signal Steuerdaten und Nutzlastdaten umfasst, wobei das stromabwärtige Signal für einen stromabwärtigen IAB-Knoten (3c) beabsichtigt ist;
Bestimmen (44), dass es sich bei dem stromabwärtigen IAB-Knoten (3c) um den Empfänger des stromabwärtigen Signals handelt, indem bestimmt wird, dass die Steuerdaten des stromabwärtigen Signals unter Verwendung einer Verwürfelungskennung des stromabwärtigen IAB-Knotens (3c) entwürfelt werden können; und
Weiterleiten (48) der Nutzlastdaten des stromabwärtigen Signals an den stromabwärtigen IAB-Knoten (3c).

2. Verfahren nach Anspruch 1, wobei die weitergeleiteten Nutzlastdaten des stromabwärtigen Signals In-Phasen-Quadraturabtastungen, IQ-Abtastungen, umfassen, wie sie in dem stromabwärtigen Signal empfangen werden.

3. Verfahren nach Anspruch 1, ferner umfassend den folgenden Schritt vor dem Schritt des Weiterleitens der Nutzlastdaten des stromabwärtigen Signals:
Ausrichten (46) von IQ-Abtastungen, die in den Nutzlastdaten des stromabwärtigen Signals empfangen wurden, auf Konstellationspunkte eines zugewiesenen Modulationsschemas der Nutzlastdaten des stromabwärtigen Signals.

4. Verfahren nach einem der vorhergehenden Ansprüche, wobei es sich bei der Verwürfelungskennung um eine temporäre Funknetzkennung einer Zelle, C-RNTI, des stromabwärtigen IAB-Knotens (3c) handelt.

5. Verfahren nach einem der vorhergehenden Ansprüche, ferner umfassend die folgenden Schritte nach dem Schritt des Weiterleitens der Nutzlastdaten des stromabwärtigen Signals:
vollständiges Dekodieren (50) der Nutzlastdaten des stromabwärtigen Signals und Bestimmen, ob das vollständige Demodulieren erfolgreich war; und
Bereitstellen einer Rückmeldung (52) über den Erfolg des vollständigen Demodulierens an den stromaufwärtigen Knoten.

6. Zwischengeschalteter integrierter Zugriffs- und Backhaul-Knoten, IAB-Knoten, (3b) zum Routen von Daten über eine drahtlose Kommunikationsverbindung in einem Mobilfunknetz (8), wobei der zwischengeschaltete IAB-Knoten (3b) Folgendes umfasst:
einen Prozessor (60); und
einen Speicher (64), der Anweisungen (67) speichert, die, wenn sie durch den Prozessor ausgeführt werden, den zwischengeschalteten IAB-Knoten (3b) zu Folgendem veranlassen:
Empfangen eines stromabwärtigen Signals von einem stromaufwärtigen Knoten, wobei das stromabwärtige Signal Steuerdaten und Nutzlastdaten umfasst, wobei das stromabwärtige Signal für einen stromabwärtigen IAB-Knoten (3c) beabsichtigt ist;
Bestimmen, dass es sich bei dem stromabwärtigen IAB-Knoten (3c) um den Empfänger des stromabwärtigen Signals handelt, indem bestimmt wird, dass Steuerdaten des stromabwärtigen Signals unter Verwendung der Verwürfelungskennung des stromabwärtigen IAB-Knotens (3c) entwürfelt werden können; und
Weiterleiten der Nutzlastdaten des stromabwärtigen Signals an den stromabwärtigen IAB-Knoten (3c).

7. Zwischengeschalteter IAB-Knoten (3b) nach Anspruch 6, wobei die weitergeleiteten Nutzlastdaten des stromabwärtigen Signals In-Phasen-Quadraturabtastungen, IQ-Abtastungen, umfassen, wie sie in dem stromabwärtigen Signal empfangen werden.

8. Zwischengeschalteter IAB-Knoten (3b) nach Anspruch 6, ferner umfassend Anweisungen (67), die, wenn sie durch den Prozessor ausgeführt werden, den zwischengeschalteten IAB-Knoten (3b) zu Folgendem veranlassen:
Ausrichten von IQ-Abtastungen, die in den Nutzlastdaten des stromabwärtigen Signals empfangen wurden, auf Konstellationspunkte eines zugewiesenen Modulationsschemas der Nutzlastdaten des stromabwärtigen Signals.

9. Zwischengeschalteter IAB-Knoten (3b) nach einem der Ansprüche 6 bis 8, wobei es sich bei der Verwürfelungskennung um eine temporäre Funknetzkennung einer Zelle, C-RNTI, des stromabwärtigen IAB-Knotens (3c) handelt.

10. Zwischengeschalteter IAB-Knoten (3b) nach einem der Ansprüche 6 bis 9, ferner umfassend Anweisungen (67), die, wenn sie durch den Prozessor ausgeführt werden, den zwischengeschalteten IAB-Knoten (3b) zu Folgendem veranlassen:
vollständiges Dekodieren der Nutzlastdaten des stromabwärtigen Signals und Bestimmen, ob das vollständige Demodulieren erfolgreich war; und
Bereitstellen einer Rückmeldung über den Erfolg des vollständigen Demodulierens an den stromaufwärtigen Knoten.

11. Computerprogramm (67, 91) zum Routen von Daten über eine drahtlose Kommunikationsverbindung in einem Mobilfunknetz (8), wobei das Computerprogramm Computerprogrammcode umfasst, der, wenn er auf einem zwischengeschalteten integrierten Zugriffs- und Backhaul-Knoten, IAB-Knoten, (3b) ausgeführt wird, den zwischengeschalteten IAB-Knoten (3b) zu Folgendem veranlasst:
Empfangen eines stromabwärtigen Signals von einem stromaufwärtigen Knoten, wobei das stromabwärtige Signal für einen stromabwärtigen IAB-Knoten (3c) beabsichtigt ist, wobei das stromabwärtige Signal Steuerdaten und Nutzlastdaten umfasst; Bestimmen, dass es sich bei dem stromabwärtigen IAB-Knoten (3c) um den Empfänger des stromabwärtigen Signals handelt, indem bestimmt wird, dass Steuerdaten des stromabwärtigen Signals unter Verwendung einer Verwürfelungskennung des stromabwärtigen IAB-Knotens (3c) entwürfelt werden können; und
Weiterleiten der Nutzlastdaten des stromabwärtigen Signals an den stromabwärtigen IAB-Knoten (3c).

12. Verfahren zum Routen von Daten über eine drahtlose Kommunikationsverbindung in einem Mobilfunknetz (8), wobei das Verfahren in einem integrierten Zugriffs- und Backhaul-Donor-Knoten, IAB-Donor-Knoten, (3a) durchgeführt wird, wobei das Verfahren die folgenden Schritte umfasst:
Empfangen (140) von Daten für eine Benutzervorrichtung;
Bestimmen (142), dass die Daten über einen zwischengeschalteten IAB-Knoten (3b) an einen stromabwärtigen IAB-Knoten (3c) zu routen sind;
Erzeugen (146) eines stromabwärtigen Signals, das für den stromabwärtigen IAB-Knoten (3c) beabsichtigt ist, was Verwürfeln von Steuerdaten des stromabwärtigen Signals unter Verwendung einer Verwürfelungskennung des stromabwärtigen IAB-Knotens (3c) umfasst, wobei das stromabwärtige Signal die Steuerdaten und die Nutzlastdaten umfasst, wobei die Nutzlastdaten die Daten für die Benutzervorrichtung umfassen; und
Übertragen (148) des stromabwärtigen Signals an den zwischengeschalteten IAB-Knoten (3b).

13. Verfahren nach Anspruch 12, wobei es sich bei der Verwürfelungskennung um eine temporäre Funknetzkennung einer Zelle, C-RNTI, des stromabwärtigen IAB-Knotens (3c) handelt.

14. Integrierter Zugriffs- und Backhaul-Donor-Knoten, IAB-Donor-Knoten, (3a) zum Routen von Daten über eine drahtlose Kommunikationsverbindung in einem Mobilfunknetz (8), wobei der IAB-Donor-Knoten (3a) Folgendes umfasst:
einen Prozessor (60); und
einen Speicher (64), der Anweisungen (67) speichert, die, wenn sie durch den Prozessor ausgeführt werden, den IAB-Donor-Knoten (3a) zu Folgendem veranlassen:
Empfangen von Daten für eine Benutzervorrichtung;
Bestimmen, dass die Daten über einen zwischengeschalteten IAB-Knoten (3b) an einen stromabwärtigen IAB-Knoten (3c) zu routen sind;
Erzeugen eines stromabwärtigen Signals, das für den stromabwärtigen IAB-Knoten (3c) beabsichtigt ist, was Verwürfeln von Steuerdaten des stromabwärtigen Signals unter Verwendung einer Verwürfelungskennung des stromabwärtigen IAB-Knotens (3c) umfasst, wobei das stromabwärtige Signal die Steuerdaten und die Nutzlastdaten umfasst, wobei die Nutzlastdaten die Daten für die Benutzervorrichtung umfassen; und
Übertragen (148) des stromabwärtigen Signals an den zwischengeschalteten IAB-Knoten (3b).

15. IAB-Donor-Knoten (3a) nach Anspruch 14, wobei es sich bei der Verwürfelungskennung um eine temporäre Funknetzkennung einer Zelle, C-RNTI, des stromabwärtigen IAB-Knotens (3c) handelt.

16. Computerprogramm (67, 91) zum Routen von Daten über eine drahtlose Kommunikationsverbindung in einem Mobilfunknetz (8), wobei das Computerprogramm Computerprogrammcode umfasst, der, wenn er auf einem integrierten Zugriffs- und Backhaul-Donor-Knoten, IAB-Donor-Knoten, (3a) ausgeführt wird, den IAB-Donor-Knoten (3a) zu Folgendem veranlasst:
Empfangen von Daten für eine Benutzervorrichtung;
Bestimmen, dass die Daten über einen zwischengeschalteten IAB-Knoten (3b) an einen stromabwärtigen IAB-Knoten (3c) zu routen sind;
Erzeugen eines stromabwärtigen Signals, das für den stromabwärtigen IAB-Knoten (3c) beabsichtigt ist, was Verwürfeln von Steuerdaten des stromabwärtigen Signals unter Verwendung einer Verwürfelungskennung des stromabwärtigen IAB-Knotens (3c) umfasst, wobei das stromabwärtige Signal die Steuerdaten und die Nutzlastdaten umfasst, wobei die Nutzlastdaten die Daten für die Benutzervorrichtung umfassen; und
Übertragen (148) des stromabwärtigen Signals an den zwischengeschalteten IAB-Knoten (3b).

## Revendications

1. Procédé de routage de données sur une liaison de communication sans fil dans un réseau cellulaire (8), le procédé étant mis en œuvre dans un nœud d'accès et de liaison terrestre intermédiaire intégré, IAB, (3b), le procédé comprenant les étapes consistant à :
recevoir (40) un signal en aval provenant d'un nœud en amont, le signal en aval comprenant des données de commande et des données de charge utile, le signal en aval étant destiné à un nœud IAB en aval (3c) ;
déterminer (44) que le nœud IAB en aval (3c) est le destinataire du signal en aval en déterminant que les données de commande du signal en aval peuvent être désembrouillées à l'aide d'un identifiant de brouillage du nœud IAB en aval (3c) ; et
transmettre (48) les données de charge utile du signal en aval au nœud IAB en aval (3c).

2. Procédé selon la revendication 1, dans lequel les données de charge utile transmises du signal en aval comprennent des échantillons en quadrature de phase (IQ) tels que reçus dans le signal en aval.

3. Procédé selon la revendication 1, comprenant en outre l'étape, avant l'étape de transmission des données de charge utile du signal en aval, consistant à :
aligner (46) des échantillons IQ reçus dans les données de charge utile du signal en aval sur des points de constellation d'un schéma de modulation attribué des données de charge utile du signal en aval.

4. Procédé selon l'une quelconque des revendications précédentes, dans lequel l'identifiant de brouillage est un identifiant temporaire de réseau radio cellulaire, C-RNTI, du nœud IAB en aval (3c).

5. Procédé selon l'une quelconque des revendications précédentes, comprenant en outre les étapes, après l'étape de transmission des données de charge utile du signal en aval, consistant à :
décoder complètement (50) les données de charge utile du signal aval et déterminer si la démodulation complète a réussi ; et
fournir une rétroaction (52) sur le succès de la démodulation complète au nœud en amont.

6. Nœud d'accès et de liaison terrestre intermédiaire intégré, IAB, (3b) permettant de router des données sur une liaison de communication sans fil dans un réseau cellulaire (8), le nœud IAB intermédiaire (3b) comprenant :
un processeur (60) ; et
une mémoire (64) stockant des instructions (67) qui, lorsqu'elles sont exécutées par le processeur, amènent le nœud IAB intermédiaire (3b) à :
recevoir un signal descendant d'un nœud en amont, le signal descendant comprenant des données de commande et des données de charge utile, le signal descendant étant destiné à un nœud IAB en aval (3c) ;
déterminer que le nœud IAB aval (3c) est le destinataire du signal descendant en déterminant que les données de commande du signal descendant peuvent être désembrouillées à l'aide de l'identifiant de brouillage du nœud IAB en aval (3c) ; et
transmettre les données de charge utile du signal descendant au nœud IAB en aval (3C).

7. Nœud IAB intermédiaire (3b) selon la revendication 6, dans lequel les données de charge utile transmises du signal descendant comprennent des échantillons en quadrature de phase, IQ, tels que reçus dans le signal descendant.

8. Noeud IAB intermédiaire (3b) selon la revendication 6, comprenant en outre des instructions (67) qui, lorsqu'elles sont exécutées par le processeur, amènent le nœud IAB intermédiaire (3b) à :
aligner les échantillons IQ reçus dans les données de charge utile du signal en aval sur des points de constellation d'un schéma de modulation attribué des données de charge utile du signal en aval.

9. Noeud IAB intermédiaire (3b) selon l'une quelconque des revendications 6 à 8, dans lequel l'identifiant de brouillage est un identifiant temporaire de réseau radio cellulaire, C-RNTI, du nœud IAB en aval (3c).

10. Noeud IAB intermédiaire (3b) selon l'une quelconque des revendications 6 à 9, comprenant en outre des instructions (67) qui, lorsqu'elles sont exécutées par le processeur, amènent le nœud IAB intermédiaire (3b) à :
décoder complètement les données de charge utile du signal en aval et déterminer si la démodulation complète a réussi ; et
fournir une rétroaction sur le succès de la démodulation complète au nœud en amont.

11. Programme informatique (67, 91) pour router des données sur une liaison de communication sans fil dans un réseau cellulaire (8), le programme informatique comprenant un code de programme informatique qui, lorsqu'il est exécuté sur un nœud d'accès et de liaison terrestre intermédiaire intégré, IAB, (3b), amène le nœud IAB (3b) intermédiaire à :
recevoir un signal descendant d'un nœud en amont, le signal descendant étant destiné à un nœud IAB en aval (3c), le signal descendant comprenant des données de commande et des données de charge utile ;
déterminer que le nœud IAB en aval (3c) est le destinataire du signal descendant en déterminant que les données de commande du signal descendant peuvent être désembrouillées à l'aide d'un identifiant de brouillage du nœud IAB en aval (3c) ; et
transmettre les données de charge utile du signal descendant au nœud IAB en aval (3c).

12. Procédé de routage de données sur une liaison de communication sans fil dans un réseau cellulaire (8), le procédé étant mis en œuvre dans un nœud donneur d'accès et de liaison terrestre intégré, IAB (3a), le procédé comprenant les étapes consistant à :
recevoir (140) des données pour un dispositif utilisateur ;
déterminer (142) que les données doivent être routées via un nœud IAB intermédiaire (3b) vers un nœud IAB en aval (3c) ;
générer (146) un signal en aval destiné au nœud IAB en aval (3c), qui comprend le brouillage de données de commande du signal en aval à l'aide d'un identifiant de brouillage du nœud IAB en aval (3c), le signal en aval comprenant les données de commande et les données de charge utile, les données de charge utile comprenant les données pour le dispositif utilisateur ; et
transmettre (148) le signal en aval au nœud IAB intermédiaire (3b).

13. Procédé selon la revendication 12, dans lequel l'identifiant de brouillage est un identifiant temporaire de réseau radio cellulaire, C-RNTI, du nœud IAB en aval (3c).

14. Nœud donneur d'accès et de liaison de liaison terrestre intégré, IAB, (3a) pour router des données sur une liaison de communication sans fil dans un réseau cellulaire (8), le nœud donneur IAB (3a) comprenant :
un processeur (60) ; et
une mémoire (64) stockant des instructions (67) qui, lorsqu'elles sont exécutées par le processeur, amènent le nœud donneur IAB (3a) à :
recevoir des données pour un dispositif utilisateur ;
déterminer que les données doivent être routées via un nœud IAB intermédiaire (3b) vers un nœud IAB en aval (3c) ;
générer un signal en aval destiné au nœud IAB en aval (3c), qui comprend des données de commande de brouillage du signal en aval à l'aide d'un identifiant de brouillage du nœud IAB en aval (3c), le signal en aval comprenant les données de commande et les données de charge utile, les données de charge utile comprenant les données pour le dispositif utilisateur ; et
transmettre (148) le signal en aval au nœud IAB intermédiaire (3b).

15. Nœud donneur IAB (3a) selon la revendication 14, dans lequel l'identifiant de brouillage est un identifiant temporaire de réseau radio cellulaire, C-RNTI, du nœud IAB en aval (3c).

16. Programme informatique (67, 91) pour router des données sur une liaison de communication sans fil dans un réseau cellulaire (8), le programme informatique comprenant un code de programme informatique qui, lorsqu'il est exécuté sur un nœud donneur d'accès et de liaison terrestre intégré, IAB (3a), amène le nœud donneur IAB (3a) à :
recevoir des données pour un dispositif utilisateur ;
déterminer que les données doivent être routées via un IAB intermédiaire (3b) vers un nœud IAB en aval (3c) ;
générer un signal en aval destiné au nœud IAB en aval (3c), qui comprend le brouillage de données de commande du signal en aval à l'aide d'un identifiant de brouillage du nœud IAB en aval (3c), le signal en aval comprenant les données de commande et les données de charge utile, les données de charge utile comprenant les données pour le dispositif utilisateur ; et
transmettre (148) le signal en aval au nœud IAB intermédiaire (3b).
